# EUROPEAN PATENT APPLICATION

(11) **EP 1 053 667 A1**
(43) Date of publication of application: **22.11.2000**
(21) Application number: 00830361.2
(22) Date of filing: 19.05.2000
(51) Int. Cl.: A01B 61/04

(54) **Ploughing body of a reversible hydropneumatic plough**

(30) Priority: 21.05.1999 IT RM990320
(71) Applicant: Sicil Tiller S.n.c. dei, 92016 Ribera (Agrigento) (IT)
(72) Inventor: Palminteri, G. Elia, 92016 Ribera (Agrigento) (IT); Palminteri Samuel, 92016 Ribera (Agrigento) (IT)
(74) Representative: Gristina, Giorgio

(57) **Abstract**

A ploughing body adaptable to a non stop reversible hydropneumatic plough includes a beam (1), having a central shank (2) diverging rearwards, downwards and upwards, in a couple (3) of share holder arms and frontally provided with a fork (4). A couple of fulcrums (P2, P1), the one fulcrum being placed over the other, are mounted on said fork (4) with relative coupling means (6, 600) fixed to said frame (10). A couple of hydraulic cylinders (5, 500), mounted between the beam (1), on opposite side thereof and the coupling means (6, 600), respectively, applies a preset strut force between the fork (4) and the coupling means (6, 600).

## Description

This invention relates to a ploughing body adaptable to a non stop reversible hydropneumatic plough of the ASI 35/40/45/50 REV kind.

As known, a plough of this kind bear a series of beams ("beam" simply means a plough drawbar to which frontally a yoke is hitched). Each beam supports shares having right hand mouldboard and left hand mouldboard, respectively, on a frame which is connected to a tractor by means of three point attachment. The plough is provided with a hydropneumatic circuit by which hydraulic cylinders mounted on the plough are fed. These hydraulic cylinders have several duties, such as to orient the frame with respect to the direction of movement of the tractor to which the plough is connected, to invert the shares in operation, to activate, in case the "non stop" or safety system is of the hydropneumatic kind, the rotation of a couple of shares upwards, when the plough comes up against an obstacle, that would be insuperable with the shares in their usual working position.

The invention is directed in particular to this specific kind of safety system. The present hydropneumatic safety systems adopt several devices to allow the upward rotation of the beam supporting a share that comes up against an obstacle. For example, in some safety systems a coupling, which is operated by means of hydraulic cylinders, is provided. This coupling through particular mechanisms allows a pair of shares to be detached in case of their failure. This involves a great effort to put back in operation a pair of shares on the plough. In other safety systems a pair of coupling pins are provided. Only one of these coupling pins, for each direction of movement of the tractor, can be broken when the moment on the share exceeds a preset value and then a maximum set pressure of a hydraulic cylinder is surpassed. Once the broken coupling pin is replaced after crossing the obstacle, the plough is able to work again. Although this last safety system doesn't involve the recovery of the pair of shares from the soul, it causes difficulties to a worker and useless waste of time.

An object of the present invention is to avoid a stop of the ploughing when an obstacle is reached and crossed which involves that the maximum set pressure inside the hydraulic cylinder, that connects a beam to the frame of the plough, is surpassed.

The above said object is achieved according to the present invention by a ploughing body adaptable to a non stop reversible hydropneumatic plough of the ASI 35/40/45/50 REV kind including a beam, supporting shares with right hand mouldboard and left hand mouldboard respectively, joined with similar other beams of the same number of ploughing bodies to a frame that is connected through an articulation H-beam to a three-point attachment of a tractor and provided with a hydropneumatic circuit, characterised in that said beam like an anchor comprises a central shank diverging rearwards, downwards and upwards, in a couple of share holder arms and frontally provided with a fork, a couple of fulcrums, the one fulcrum being placed over the other, being mounted on said fork with relative coupling means fixed to said frame; at least a hydraulic cylinder, operatively connected to said hydropneumatic circuit and mounted between said beam and said coupling means, respectively, of said couple applying a preset strut force between said fork and said coupling means.

Now, the invention will be described particularly with reference to a preferred embodiment thereof, although it should be appreciated that changes can be made without departing from the scope of the present invention and referring to the enclosed drawing, in which
Figure 1 shows a diagrammatic, partially cut away, longitudinal side view, of a ploughing body according to the present invention, the ploughing body being shown with dash lines in a rotated position;
Figure 2 shows a partially cut away, top view of the ploughing body of Figure 1;
Figure 3 shows a frontal view of a ploughing body of Figure 1;
Figure 4 shows a partially cut away, longitudinal side view, of a non stop reversible hydropneumatic plough using ploughing bodies according to the present invention; and
Figure 5 shows a partially cut away, top view of the ploughing body of an alternative embodiment of the ploughing body according to the present invention.

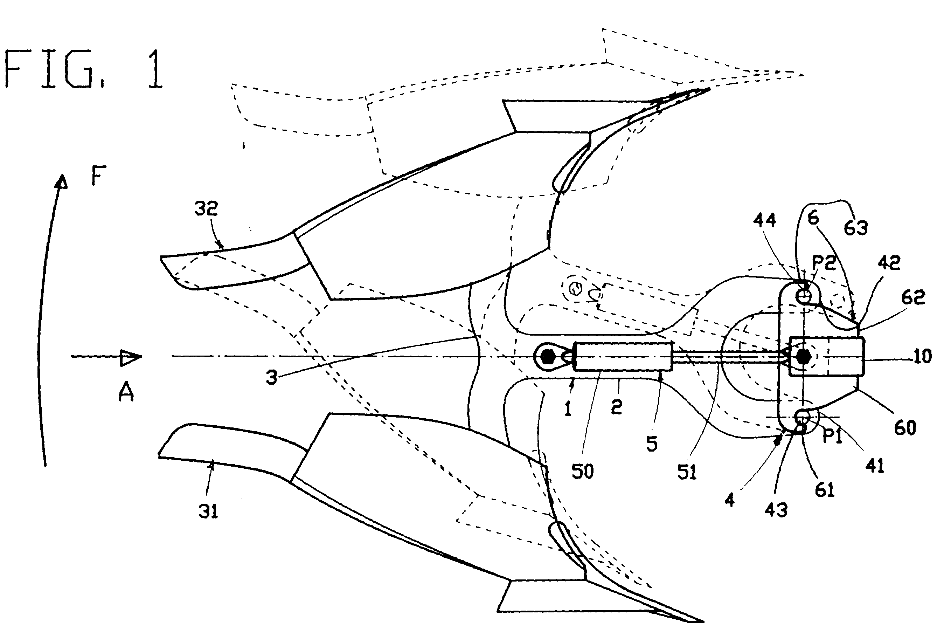

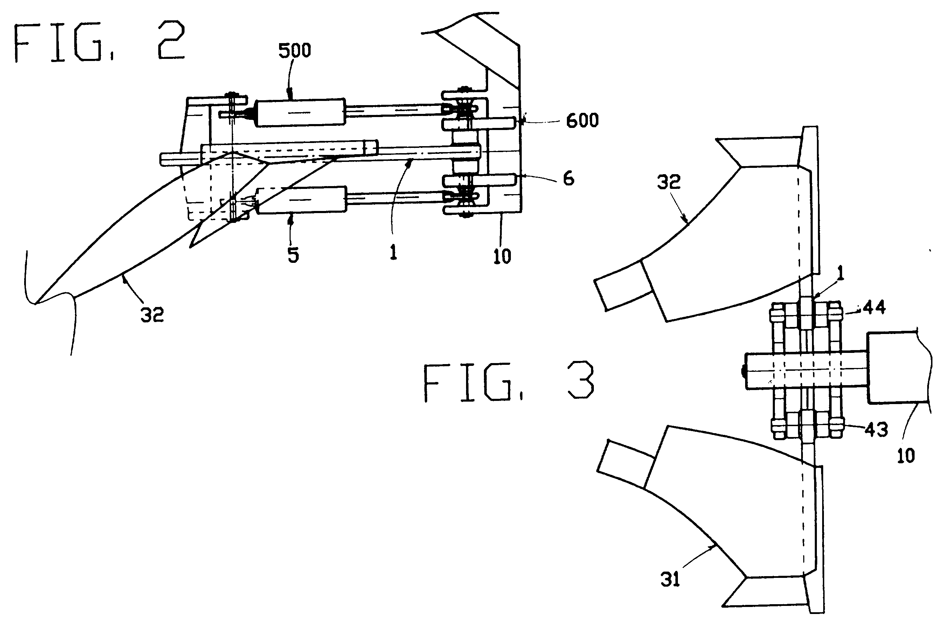

Referring to the drawing, in particular to Figures 1 to 3, a ploughing body according to the invention is shown in which a beam is denoted in general as 1, a plough frame as 10, a pair of hydraulic cylinders as 5 and 500, respectively (Figure 2), and coupling means as 6 and 600 respectively, that connect the beam 1 to the frame 10.

The beam 1 is shaped as an anchor having a central shank 2. The central shank 2 is divergent rearwards, downwards and upwards, into a couple of arms in general denoted as 3. Each arm of the couple 3 supports a share 31 having a right hand mouldboard and a share 32 having a left hand mouldboard. These shares work alternatively in each ploughing run, as explained below. The shank 2 is frontally provided with a fork 4. On the ends 41, 42 of the fork 4 there are a couple of fulcrums P1, P2, the one fulcrum being placed over the other, when the fork 4 is connected to the coupling means 6, 600 fixed to the frame 10.

In an embodiment shown in the figures, the fork ends 41, 42 are sandwiched between the coupling means 6, 600. The coupling means 6, 600, suitably fixed to the frame 10 with a Π shaped profile, have sides 60, 62 joined with the frame 10, e.g. by welding, and a core ending in two hook shaped ends 61, 63. These ends 61, 63, which are made in both the coupling means 6, 600 in a mirror-image relationship, form seats for two pins 43, 44 perpendicularly projecting from the ends of the fork 4 of the beam 1. The ends 61, 63 of the coupling means 6, 600, together with the pins 43, 44, constitute the fulcrums P1, P2 to rotate the beam 1 to the frame 10, as explained below. It should be appreciated that the connection between the fork 4 and the coupling means 6, 600 can be made also in a different way, for example through pins integral with the coupling means and hook shaped ends made on the fork.

For clarity sake, the articulated joint of the body 50 of the cylinder 5, 500 on the beam is shown in general only by a pivot (not numbered), and such a connection is represented more in detail in Figure 2. It's the same thing for the connection of the piston rod 51 to the frame 10.

When the plough is towed by a tractor (not shown), the shares in Figure 1 move in the direction of an arrow A. If the share 31 hits an obstacle (not represented) the pressure, to which the cylinder 5, 500 is set to act as a strut between the beam 1 and the coupling means 6, 600 and to hold the last ones joined to the pins of the fork 4, may be exceeded. In this case a portion of the hydropneumatic fluid is discharged from the body 50 of the cylinders 5, 500 to return to a known hydropneumatic accumulator, usually charged with nitrogen, that makes part of the hydropneumatic circuit (not shown) in the reversible plough. Therefore, the beam 1 pivoted in the fulcrum P1 tends to rotate upwards as indicated by an arrow F, until a position represented with a dash line, that allows the obstacle (normally of a height of about 0.55 m with respect to the point of the share) to be crossed. When the obstacle has been crossed, the work pressure inside the cylinder is restored and the pin 44 returns to its seat in the end 63 of the coupling means 6, 600, when the beam 1 rotates in the direction opposed to that indicated by the arrow F.

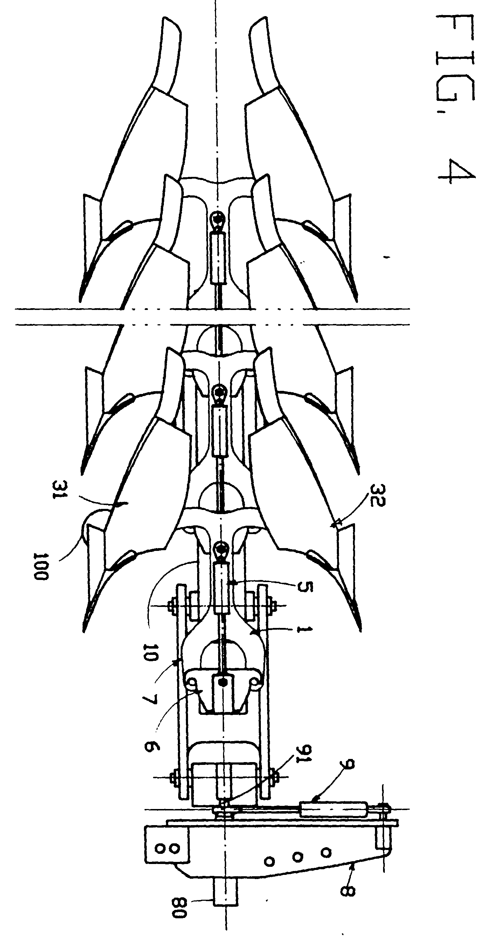

In Figure 4 it is shown how the beam 1, together with the similar not numbered beams, is mounted through the frame 10 on the plough. The frame 10 is articulated by means of an articulation H-beam 7 to a three-point attachment 8 of a tractor. The H-beam 7 is swinging through a spindle 80 on the attachment 8. An inversion cylinder 9 allows the H-beam 7 to be rotated about 180 degrees with a result that the share 32 with left hand mouldboard downwards, i.e. in a work position. The piston rod of the inversion cylinder 9 is engaged with a pivot 91 parallely offset in the horizontal plane with respect to the axis of the spindle 80.

Although it is not shown, the frame 10, as known, can be oriented in the desired angle to the three-point attachment 8 by means of suitable hydraulic cylinders (not shown). The plough has a bearing wheel 100 to keep the distance with the ground.

In operation, when the worker inverts the direction of movement of the tractor in that one opposed to the arrow A, he will operate the inversion cylinder 9 to cause the shares 32 with left hand mouldboard to work.

Everyone can understand the advantages of the invention, in particular the reliability of the safety system performed by virtue of the invention. Should one of the pipes of the hydropneumatic circuit break down accidentally, the cylinders 5, 500 can no longer operate as a strut, but the beam 1 with the shares 31, 32 remains hung up to the frame 10 and is not lost on the ground. This doesn't imply any waste of time to restore the work situation.

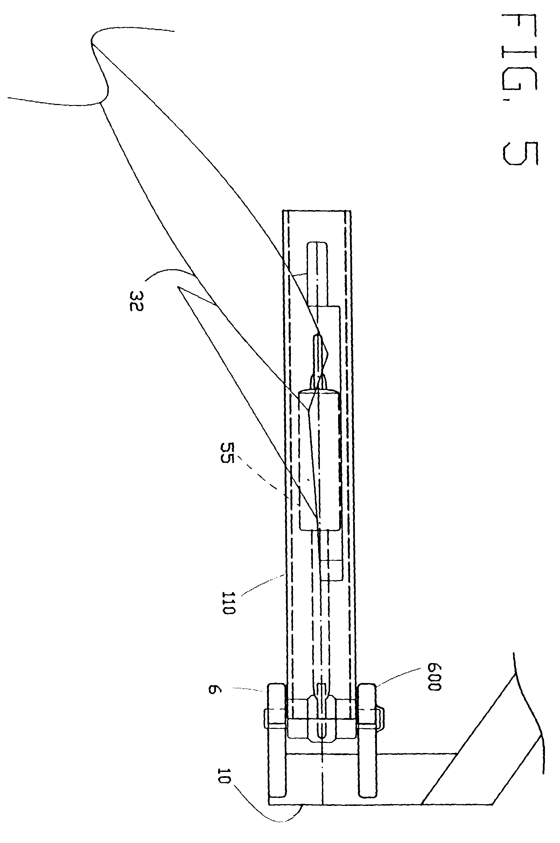

Of course, changes in the embodiment above described can be made. Referring to figure 5 a change in the ploughing body according the invention is shown. Therein the central shank of the beam has a conformation of a box shaped structure 110 having only one hydraulic cylinder 55 contained inside. The side view remains substantially the same to that in figure 1, as well as the operation, no longer explained.

The present invention has been described with regard to a specific embodiment thereof, but it should be expressly intended that modifications, additions and/or omissions can be made without departing from the scope of the invention, defined by the enclosed claims.

## Claims

1. A ploughing body adaptable to a non stop reversible hydropneumatic plough of the ASI 35/40/45/50 REV kind including a beam (1), supporting shares with right hand mouldboard and left hand mouldboard (31, 32) respectively, joined with similar other beams of the same number of ploughing bodies to a frame (10) that is connected through an articulation H-beam (7) to a three-point attachment of a tractor (8) and provided with a hydropneumatic circuit, characterised in that said beam (1) like an anchor comprises a central shank (2) diverging rearwards, downwards and upwards, in a couple (3) of share holder arms and frontally provided with a fork (4), a couple of fulcrums (P2, P1), the one fulcrum being placed over the other, being mounted on said fork (4) with relative coupling means (6, 600) fixed to said frame (10); at least a hydraulic cylinder (55; 5, 500), operatively connected to said hydropneumatic circuit and mounted between said beam (1) and said coupling means (6, 600), respectively, of said couple applying a preset strut force between said fork (4) and said coupling means (6, 600).

2. A ploughing body according to claim 1, characterised in that the ends (41, 42) of said fork (4) are sandwiched between said coupling means (6, 600) to the frame (10), and said fulcrums (P2, P1) the one fulcrum being placed over the other one, are comprised of two pins (43, 44) perpendicularly projecting from said fork ends (41, 42) and integral with the same fork ends and by seats on each coupling means (6, 600) able to house said pins (43, 44).

3. A ploughing body according to claim 2, characterised in that said coupling means (6, 600) have a Π shaped profile, with sides (60, 62) joined with the frame (10) and a core ending in two hook shaped ends (61, 63) as seats for said pins (43, 44), opposite to fork (4).

4. A ploughing body according to claim 1, characterised in that the shank of the beam is made as a box shaped structure (110), inside which the hydraulic cylinder (55) is placed.
